# EUROPEAN PATENT APPLICATION

(11) **EP 4 224 573 A1**
(43) Date of publication of application: **09.08.2023**
(21) Application number: 21875194.9
(22) Date of filing: 14.09.2021
(51) Int. Cl.: H01M 4/36, H01M 4/38, H01M 4/62, H01M 10/0566

(54) **NEGATIVE ELECTRODE ACTIVE MATERIAL FOR SECONDARY BATTERIES, AND SECONDARY BATTERY**

(30) Priority: 30.09.2020 JP 2020165803
(71) Applicant: Panasonic Intellectual Property Management Co., Ltd., Osaka-shi, Osaka 540-6207 (JP)
(72) Inventor: BADAR, Saifullah, Osaka-shi, Osaka 540-6207 (JP); SAKATA, Motohiro, Osaka-shi, Osaka 540-6207 (JP); SUZUKI, Hirotetsu, Osaka-shi, Osaka 540-6207 (JP)
(74) Representative: Novagraaf International SA
(86) International application number: PCT/JP2021/033787
(87) International publication number: WO 2022/070892

(57) **Abstract**

This negative electrode active material for secondary batteries contains a silicon composite material which is provided with a lithium ion conductive phase that contains silicon, and silicon particles that are dispersed in the lithium ion conductive phase. The silicon composite material contains a nitrogen-containing compound in the surface; and the nitrogen-containing compound is represented by general formula LiₘSiOₓN_{y}M_{z} (wherein 0 ≤ m ≤ 1, 0 ≤ x ≤ 2.5, 0.025 ≤ y ≤ 1.33, 0 ≤ z ≤ 0.5, and M represents a metal element other than Si and Li).

## Description

### TECHNICAL FIELD

The present disclosure relates to a negative electrode active material for a secondary battery and a secondary battery.

### BACKGROUND ART

In recent years, non-aqueous electrolyte secondary batteries represented by lithium-ion secondary batteries have been expected as a power source for small-size consumer applications, power storage devices, and electric vehicles since they have a high voltage and a high energy density. The non-aqueous electrolyte secondary battery comprises a positive electrode, a negative electrode, and a non-aqueous electrolyte solution. In the negative electrode, a silicon-containing material that forms an alloy with lithium is investigated as a negative electrode active material having a high theoretical capacity density. The non-aqueous electrolyte solution includes a lithium salt, and for the lithium salt, lithium hexafluorophosphate (LiPF₆) is commonly used.

The fluorine included in the non-aqueous electrolyte solution may react with moisture in the battery to form hydrogen fluoride gas. Hydrogen fluoride easily decomposes the silicon-containing material, and cycle characteristics are likely to be deteriorated due to deterioration of the silicon-containing material by the decomposition. To prevent the deterioration of the charge-discharge characteristics due to hydrogen fluoride, considered to be effective are reducing hydrogen fluoride in the battery and modifying a surface of the negative electrode active material to inhibit the deterioration of the negative electrode active material.

To reduce hydrogen fluoride in the battery, Patent Literature 1 proposes addition of a glass powder including silicon dioxide and an oxide of an alkali earth metal into a negative electrode and the like. Patent Literature 2 proposes modification of particle surfaces of a silicon-containing material with a silicon having a specific structure.

### CITATION LIST

### PATENT LITERATURE

PATENT LITERATURE 1: Japanese Translation of PCT International Application Publication No. 2015-532762
PATENT LITERATURE 2: Japanese Unexamined Patent Application Publication No. 2011-14298

### SUMMARY

Art described in Patent Literature 1 and Patent Literature 2 is insufficient for inhibiting the deterioration of the negative electrode active material due to hydrogen fluoride, and requires further improvement in terms of improvement of battery characteristics.

An aspect of the present disclosure relates to a negative electrode active material for a secondary battery including a silicon composite material, comprising: a lithium-ion conductive phase including silicon; and silicon particles dispersed in the lithium-ion conductive phase, wherein the silicon composite material includes a nitrogen-containing compound on a surface thereof, and the nitrogen-containing compound is represented by the general formula: LiₘSiOₓN_{y}M_{z}, wherein 0 ≤ m ≤ 1, 0 ≤ x ≤ 2.5, 0.025 ≤ y ≤ 1.33, 0 ≤ z ≤ 0.5, and M represents a metal element other than Si and Li.

Another aspect of the present disclosure relates to a secondary battery comprising: a positive electrode; a negative electrode; and a non-aqueous electrolyte solution, wherein the negative electrode includes the above negative electrode active material.

According to the present disclosure, the charge-discharge cycle characteristics of the secondary battery may be improved.

### BRIEF DESCRIPTION OF DRAWING

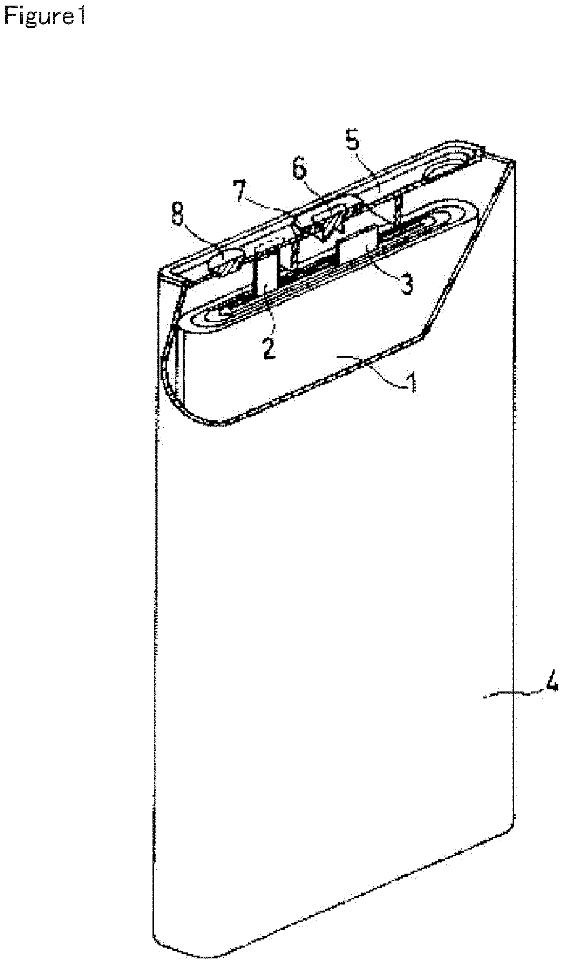

FIG. 1 is a schematic perspective view of a secondary battery according to an embodiment of the present disclosure, a part of which is cut.

### DESCRIPTION OF EMBODIMENTS

Hereinafter, embodiments will be described in detail with reference to the drawing. Note that excessively detailed description may be omitted. For example, detailed description of well-known matters or duplicate description of the substantially same constitution may be omitted. This is to avoid the following description to be excessively redundant, and to facilitate understanding by a person skilled in the art. The attached drawing and the following description are provided for a person skilled in the art to sufficiently understand the present disclosure, and are not intended to limit the subject matter recited in the claims.

A negative electrode active material for a secondary battery according to an embodiment of the present disclosure relates to a negative electrode active material for a secondary battery including a silicon composite material, comprising: a lithium-ion conductive phase including silicon; and silicon particles dispersed in the lithium-ion conductive phase, wherein the silicon composite material includes a nitrogen-containing compound on a surface thereof, and the nitrogen-containing compound is represented by the general formula: LiₘSiOₓN_{y}M_{z}, wherein 0 ≤ m ≤ 1, 0 ≤ x ≤ 2.5, 0.025 ≤ y ≤ 1.33, 0 ≤ z ≤ 0.5, and M represents a metal element other than Si and Li.

The silicon composite material has a sea-island structure in which the silicon particles being the island part are dispersed in the lithium-ion conductive phase including silicon being the sea part. Regulating an amount of the silicon particles dispersed in the lithium-ion conductive phase may increase the battery capacity. The lithium-ion conductive phase including silicon, however, does not have high resistance against hydrogen fluoride derived from a fluorine component included in the electrolyte solution, and the like, and there is a risk of easy dissolution in hydrogen fluoride. On the particle surfaces of the silicon composite material with the dissolved lithium-ion conductive phase, a decomposed product generated by a side reaction between silicon generated by dissolution in hydrogen fluoride and the electrolyte solution is deposited as an impurity. This impurity inhibits the reaction between the silicon composite material and the electrolyte solution, which is involved with the charge and discharge of the battery, and thereby high charge-discharge cycle characteristics are difficult to be maintained.

Accordingly, the negative electrode active material for a secondary battery of the present embodiment includes the nitrogen-containing compound represented by the general formula: LiₘSiOₓN_{y}M_{z}, wherein 0 ≤ m ≤ 1, 0 ≤ x ≤ 2.5, 0.025 ≤ y ≤ 1.33, 0 ≤ z ≤ 0.5, and M represents a metal element other than Si and Li, on the surface of the silicon composite material. The nitrogen-containing compound represented by the above general formula has high resistance against hydrogen fluoride compared with the lithium-ion conductive phase including silicon. The nitrogen-containing compound present on the surface of the silicon composite material may inhibit the dissolution of the lithium-ion conductive phase. As a result, the side reaction between silicon and the electrolyte solution may be inhibited, and high cycle characteristics may be maintained.

The surface of the silicon composite material including the nitrogen-containing compound is referred to a region of the particle inside from the outermost surface to 1 µm of the silicon composite material. When the nitrogen-containing compound is included in the particle inside with 1 µm or more, the silicon composite particles have a high particle hardness. As a result, in the silicon particles being the island part, expansion and contraction needed for charge and discharge are inhibited to deteriorate the charge-discharge characteristics. The nitrogen-containing compound is further preferably included in a region of the particle inside from the outermost surface to 5 nm of the silicon composite material.

The nitrogen-containing compound preferably includes at least one of silicon nitride and a nitride silicate. Since having high resistance against hydrogen fluoride, the nitride-containing compound particularly preferably has a Si element-N element bond, and is preferably Si₃N₄.

A method for producing the silicon composite material including the nitride-containing compound on the surface will be described. (1) First, a silicon composite material is heated in a batch-type heating furnace to 600°C to 1000°C. (2) Then, with maintaining the heating, ammonia gas (NH₃) flows in the batch-type heating furnace at a flow rate of, for example, 0.5 L/min for 5 hours or longer. (3) Thereafter, the supply of the ammonia gas is stopped, and silicon composite particles are cooled. According to the above method, SiO₂ included in the lithium-ion conductive phase including silicon and NH₃ react to form the silicon composite material including the nitride-containing compound on the surface. Here, even when the lithium-ion conductive phase including silicon includes no SiO₂, the surface of the lithium-ion conductive phase has a SiO₂ coating due to natural oxidation.

As another method for producing the silicon composite material including the nitride-containing compound on the surface, the silicon composite material including the nitride-containing compound on the surface may be produced by: mixing and calcining a powder of urea, ammonium carbonate, bis(trimethylsilyl)amine, lithium amide, or the like and the silicon composite material.

Including the nitride-containing compound of the silicon composite material on the surface may be confirmed by using X-ray photoelectron spectroscopy and TEM-EELS, which combines transmission electron microscopy and electron energy-loss spectroscopy (EELS). In particular, using TEM-EELS may analyze a bonding state of the compound with a spatial resolution of 1 nm.

The silicon-containing composite material including the nitrogen-containing compound on the surface has an N1s peak derived from the Si element-N element bond on an XPS pattern obtained by an XPS measurement. When the XPS pattern has this N1s peak within a range of 397 eV or higher and 399 eV or lower, the silicon-containing composite material including the nitrogen-containing compound on the surface has higher resistance against hydrogen fluoride.

A nitrogen content included in the silicon composite material is preferably 0.1 wt% or more and 20 wt% or less based on the total amount of the silicon composite material from the viewpoint of improvement of the cycle characteristics. If the nitrogen content is too low, a sufficient amount of the nitride-containing compound is not formed to fail to inhibit the dissolution of the lithium-ion conductive phase and the side reaction with the electrolyte solution. If the nitrogen content is too high, the nitride composite oxide is excessively formed to increase the particle hardness of the silicon composite particles. As a result, in the silicon particles being the island part, expansion and contraction needed for charge and discharge are inhibited to deteriorate the charge-discharge characteristics.

The nitride composite oxide is represented by the general formula: LiₘSiOₓN_{y}M_{z}, wherein 0 ≤ m ≤ 1, 0 ≤ x ≤ 2.5, 0.025 ≤ y ≤ 1.33, 0 ≤ z ≤ 0.5, and M represents a metal element other than Si and Li. Here, the metal element M preferably includes at least one element selected from the group consisting of B, Al, Zr, Nb, Ta, La, V, Y, Ti, P, Bi, Zn, Sn, Pb, Sb, Co, Er, F, C, and W which are group 1 elements in the long periodic table and group 2 elements in the long periodic table. Specifically, for example, B has a low melting point and advantage for improving flowability during the sintering. Al, Zr, Nb, Ta, and La can increase the hardness with maintaining the ion conductivity.

### (Lithium-Ion Conductive Phase)

The lithium-ion conductive phase preferably includes at least one phase selected from the group consisting of a SiO₂ phase, a silicate phase, and a carbon phase.

The SiO₂ phase is an amorphous phase including 95 mass% or more of silicon dioxide. A composite material in which silicon particles are dispersed in the SiO₂ phase is represented by SiOₓ. "x" is, for example, 0.5 ≤ x <2, and preferably 0.8 ≤ x ≤ 1.6. SiOₓ may be obtained by: heat-treating silicon monoxide; and separating a SiO₂ phase and a fine Si phase with a disproportionation reaction, for example. Observation of a particle cross section of SiOₓ using transmission electron microscopy (TEM) may confirm the silicon particles dispersed in the SiO₂ phase.

The silicate phase preferably includes at least one of an alkali metal element (a group 1 element other than hydrogen in the long periodic table) and a group 2 element in the long periodic table. The alkali metal element includes lithium (Li), potassium (K), sodium (Na), and the like. The group 2 element includes magnesium (Mg), calcium (Ca), strontium (Sr), barium (Ba), and the like. The silicate phase can have a composition represented by the formula: Li_{2y}SiO_{2+y}, wherein 0 < y < 2. "y" may be 1/2, or may be 1. The composite material in which the silicon particles are dispersed in the silicate phase may be obtained by: crushing with stirring a mixture of a silicate and a raw material silicon with a ball mill or the like to form fine particles; and then heat-treating the mixture in an inert atmosphere, for example.

The silicate phase may include an element other than the above. The other element may be at least one selected from the group consisting of B, Al, Zr, Nb, Ta, La, V, Y, Ti, P, Bi, Zn, Sn, Pb, Sb, Co, Er, F, C, and W. Specifically, for example, B has a low melting point and advantage for improving flowability during the sintering. Al, Zr, Nb, Ta, and La can increase the hardness with maintaining the ion conductivity. A content of the element M is, for example, 10 mol% or less, and may be 5 mol% or less, based on the total amount of the elements other than the elements included in the silicate phase.

An average particle diameter of the silicon particles dispersed in the silicate phase (before an initial charge) may be 10 nm or more and 500 nm or less, and may be 50 nm or more and 400 nm or less. The average particle diameter of the silicon particles may be obtained by using an SEM image of a cross section of the composite material and by determining an average value of maximum diameters of random 100 silicon particles. A content of the silicon particles dispersed in the silicate phase may be 30 mass% or more and 95 mass% or less, and may be 35 mass% or more and 75 mass% or less, based on the entirety of the composite material.

The carbon phase includes, for example, amorphous carbon having low crystallinity. The amorphous carbon may be, for example, easily graphitizable carbon (soft carbon), and may be hardly graphitizable carbon (hard carbon). The composite material in which the silicon particles are dispersed in the carbon phase may be obtained by: crushing with stirring a mixture of a carbon source and a raw material silicon with a ball mill or the like to form fine particles; and then heat-treating the mixture in an inert atmosphere, for example. For the carbon source, saccharides such as carboxymethylcellulose (CMC), water-soluble resins such as polyvinylpyrrolidone, and the like are used, for example.

The composition of the silicon composite material may be determined by: obtaining a backscattered electron image of a cross section of a negative electrode mixture layer with a field-emission scanning electron microscope (FE-SEM); observing particles of the silicon composite material; and performing elemental analysis of the observed particles of the silicon composite material, for example. For the elemental analysis, electron probe micro analyzer (EPMA) analysis, and the like are used, for example. The above analysis may also determine the composition of the lithium-ion conductive phase.

The silicon composite material is, for example, a particle material. An average particle diameter (D50) of the silicon composite material is, for example, 1 µm or more and 25 µm or less, and preferably 4 µm or more and 15 µm or less. Within the above range, good battery performances are easily obtained. The average particle diameter (D50) herein means a particle diameter at which a volumetric integrated value is 50% (volumetric average particle diameter) in a particle size distribution measured by a laser diffraction scattering method. For the measurement device, "LA-750", manufactured by HORIBA, Ltd., may be used, for example.

At least a part of the particle surfaces of the silicon composite material may be covered with a conductive layer from the viewpoint of improvement of conductivity. The conductive layer includes a conductive material such as a conductive carbon. A coating amount of the conductive layer is, for example, 1 part by mass or more and 10 parts by mass or less based on 100 parts by mass of the total of the silicon composite material and the conductive layer. The silicon composite material having the conductive layer on the surface may be obtained by, for example, heat-treating coal pitch or the like in a silicon composite material atmosphere.

### (Carbon Material)

The negative electrode active material may further include a carbon material electrochemically occluding and releasing lithium ions. The carbon material has a smaller degree of expansion and contraction during charge and discharge than the silicon composite material. Using the Si-containing material and the carbon material in combination may maintain good contacting state between the negative electrode active material particles and between the negative electrode mixture layer and the negative electrode current collector during repeated charges and discharges. That is, with imparting the high capacity of the silicon composite material to the negative electrode, the cycle characteristics may be improved. From the viewpoints of higher battery capacity and improvement of the cycle characteristics, a proportion of the carbon material in the total of the silicon composite material and the carbon material is preferably 98 mass% or less, more preferably 70 mass% or more and 98 mass% or less, and further preferably 75 mass% or more and 95 mass% or less.

Examples of the carbon material used for the negative electrode active material include graphite, easily graphitizable carbon (soft carbon), and hardly graphitizable carbon (hard carbon). The carbon materials may be used singly, or in combination of two or more thereof.

Among them, the carbon material is preferably graphite because of excellent charge-discharge stability and a small irreversible capacity. Examples of the graphite include natural graphite, artificial graphite, and graphitized mesophase carbon particles. The graphite particles may partially include amorphous carbon, easily graphitizable carbon, and hardly graphitizable carbon.

### [Secondary Battery]

A secondary battery according to an embodiment of the present disclosure comprises: a positive electrode; a negative electrode; and a non-aqueous electrolyte solution, and a negative electrode comprising the above negative electrode active material is used for the negative electrode. Hereinafter, the secondary battery will be described in detail.

### (Negative Electrode)

The negative electrode may comprise: a negative electrode current collector; and a negative electrode mixture layer supported on a surface of the negative electrode current collector. The negative electrode mixture layer may be formed by applying a negative electrode slurry dispersing a negative electrode mixture in a dispersing medium on the surface of the negative electrode current collector; and drying the coating film. The coating film after the drying may be rolled as necessary. The negative electrode mixture layer may be formed on one surface of the negative electrode current collector, and may be formed on both the surfaces thereof.

The negative electrode mixture may include a conductive agent, a binder, and the like as optional components.

Examples of the conductive agent include: carbons such as carbon nanotube and acetylene black; and metals such as aluminum. The conductive agents may be used singly, or in combination of two or more thereof.

Examples of the binder include: acrylic resins; fluororesins such as polytetrafluoroethylene and polyvinylidene fluoride (PVDF); polyolefin resins such as polyethylene and polypropylene; polyamide resins such as an aramid resin; and polyimide resins such as a polyimide and a polyamideimide. For the binder, rubber materials such as styrene-butadiene copolymer rubber (SBR) may be used.

Examples of the binder include carboxymethylcellulose (CMC) and a modified product thereof (including salts such as a Na salt), and cellulose derivatives such as methylcellulose (such as cellulose ether). The binders may be used singly, or in combination of two or more thereof.

Examples of the dispersing medium include, but not particularly limited to, water, alcohols such as ethanol, ethers such as tetrahydrofuran, amides such as dimethylformamide, N-methyl-2-pyrrolidone (NMP), or a mixed solvent thereof.

As the negative electrode current collector, a nonporous conductive substrate (such as a metal foil) or a porous conductive substrate (such as meshed, net, and punched sheets) is used. Examples of a material of the negative electrode current collector include stainless steel, nickel, a nickel alloy, copper, and a copper alloy. A thickness of the negative electrode current collector is not particularly limited, and may be 1 to 50 µm, and may be 5 to 20 µm.

### (Positive Electrode)

The positive electrode may comprise: a positive electrode current collector; and a positive electrode mixture layer supported on a surface of the positive electrode current collector. The positive electrode mixture layer may be formed by applying a positive electrode slurry dispersing a positive electrode mixture in a dispersing medium such as NMP on the surface of the positive electrode current collector; and drying the coating film. The coating film after the drying may be rolled as necessary. The positive electrode mixture layer may be formed on one surface of the positive electrode current collector, and may be formed on both the surfaces thereof. The positive electrode mixture includes a positive electrode active material as an essential component, and may include a binder, a conductive agent, and the like as optional components.

For the positive electrode active material, a composite oxide including lithium and a transition metal is used, for example. Examples of the transition metal include Ni, Co, and Mn. Examples of the composite oxide including lithium and the transition metal include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, and LiₐMn_{2-b}M_{b}O₄. Here, a = 0 to 1.2, b = 0 to 0.9, and c = 2.0 to 2.3. M represents at least one selected from the group consisting of Na, Mg, Sc, Y, Mn, Fe, Co, Ni, Cu, Zn, Al, Cr, Pb, Sb, and B. The value "a", which represents a molar ratio of lithium, increases or decreases with charge and discharge.

Among them, preferable is a lithium-nickel composite oxide represented by LiₐNi_{b}M_{1-b}O₂, wherein 0 < a ≤ 1.2, 0.3 ≤ b ≤ 1, and M represents at least one selected from the group consisting of Mn, Co, and Al. From the viewpoint of a higher capacity, "b" more preferably satisfies 0.85 ≤ b ≤ 1. From the viewpoint of stability of the crystalline structure, further preferable is LiₐNi_{b}Co_{c}Al_{d}O₂, wherein 0 < a ≤ 1.2, 0.85 ≤ b < 1, 0 < c ≤ 0.15, 0 < d ≤ 0.1, and b+c+d = 1.

For the binder, the resin materials exemplified in the negative electrode may be used. For the conductive agent, conductive agents same as those exemplified in the negative electrode may be used. For the conductive agent, graphite such as natural graphite and artificial graphite may be used.

A shape and thickness of the positive electrode current collector may be each selected from a shape and range according to the negative electrode current collector. Examples of a material of the positive electrode current collector include stainless steel, aluminum, an aluminum alloy, and titanium.

### (Non-Aqueous Electrolyte Solution)

The non-aqueous electrolyte solution includes a non-aqueous solvent and a lithium salt dissolved in the non-aqueous solvent. A concentration of the lithium salt in the non-aqueous electrolyte solution is preferably, for example, 0.5 mol/L or more and 2 mol/L or less. The concentration of the lithium salt within the above range may yield the non-aqueous electrolyte solution having excellent ion conductivity and an appropriate viscosity. Note that the concentration of the lithium salt is not limited to the above.

For the non-aqueous solvent, cyclic carbonate esters, chain carbonate esters, cyclic carboxylate esters, and chain carboxylate esters are used, for example. Examples of the cyclic carbonate esters include propylene carbonate (PC) and ethylene carbonate (EC). Examples of the chain carbonate esters include diethyl carbonate (DEC), ethyl methyl carbonate (EMC), and dimethyl carbonate (DMC). Examples of the cyclic carboxylate esters include γ-butyrolactone (GBL) and γ-valerolactone (GVL). Examples of the chain carboxylate esters include methyl formate, ethyl formate, propyl formate, methyl acetate, ethyl acetate, propyl acetate, methyl propionate, ethyl propionate, and propyl propionate. The non-aqueous solvents may be used singly, or in combination of two or more thereof.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lithium lower aliphatic carboxylate, LiCl, LiBr, LiI, borate salts, and imide salts. Examples of the borate salts include lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonate-O,O')borate. Examples of the imide salts include lithium bisfluorosulfonylimide (LiN(FSO₂)₂), lithium bistrifluoromethanesulfonate imide (LiN(CF₃SO₂)₂), lithium trifluoromethanesulfonate nonafluorobutanesulfonate imide (LiN(CF₃SO₂)(C₄F₉SO₂)), and lithium bispentafluoroethanesulfonate imide (LiN(C₂F₅SO₂)₂). The lithium salts may be used singly, or in combination of two or more thereof.

### (Separator)

Between the positive electrode and the negative electrode, a separator is typically preferably interposed. The separator has high ion permeability, and comprises appropriate mechanical strength and insulation properties. For the separator, a fine porous thin film, a woven fabric, a nonwoven fabric, and the like may be used. A material of the separator is preferably a polyolefin such as polypropylene and polyethylene.

An example of a structure of the secondary battery is a structure comprising: an electrode group in which the positive electrode and the negative electrode are wound with the separator interposed therebetween; and the non-aqueous electrolyte solution, wherein the electrode group and the non-aqueous electrolyte solution are housed in an exterior. Alternatively, instead of the wound electrode group, an electrode group having another form such as a stacked electrode group in which the positive electrode and the negative electrode are stacked with the separator interposed therebetween may be applied. The secondary battery may be any form of, for example, a cylinder, rectangular, coin, button, laminate, and the like.

Hereinafter, a structure of a rectangular secondary battery as an example of the secondary battery according to the present disclosure will be described with reference to FIG. 1. FIG. 1 is a schematic perspective view of the secondary battery according to an embodiment of the present disclosure, a part of which is cut.

The battery comprises: a bottomed rectangular battery case 4; and an electrode group 1 and a non-aqueous electrolyte solution that are housed in the battery case 4. The electrode group 1 has: a long band-shaped negative electrode; a long band-shaped positive electrode; and a separator interposed therebetween to prevent the direct contact. The electrode group 1 is formed by winding the negative electrode, the positive electrode, and the separator with a flat plate-shaped winding core as a center, and removing the winding core.

With the negative electrode current collector of the negative electrode, one end of a negative electrode lead 3 is attached by welding or the like. The other end of the negative electrode lead 3 is electrically connected to a negative electrode terminal 6 provided on a sealing plate 5 via an insulating plate made of a resin. The negative electrode terminal 6 is insulated from the sealing plate 5 with a gasket 7 made of a resin. With the positive electrode current collector of the positive electrode, one end of a positive electrode lead 2 is attached by welding or the like. The other end of the positive electrode lead 2 is connected to a back surface of the sealing plate 5 via the insulating plate. That is, the positive electrode lead 2 is electrically connected to the battery case 4 that also serves as a positive electrode terminal. The insulating plate isolates the electrode group 1 and the sealing plate 5, and isolates the negative electrode lead 3 and the battery case 4. A circumference of the sealing plate 5 fits into an opening end of the battery case 4, and the fitting part is welded by laser. As above, the opening of the battery case 4 is sealed with the sealing plate 5. An injection port for the electrolyte solution provided on the sealing plate 5 is capped with a sealing plug 8.

### EXAMPLES

Hereinafter, Example of the present disclosure will be specifically described, but the present invention is not limited to the following Example.

### <Example 1>

### [Preparation of Silicon Composite Material]

Lithium silicate (Li₂Si₂O₅) having an average particle diameter of 10 µm and a raw material silicon (3N, average particle diameter of 10 µm) were mixed at a mass ratio of 40:60. The mixture was fed into a pot (made of SUS, volume: 500 mL) of a planetary ball mill (P-5, manufactured by Fritsch GmbH), 24 balls (diameter of 20 mm) made of SUS were added into the pot, and the lid is closed. The mixture was crush-treated in an inert atmosphere at 200 rpm for 50 hours.

Then, the powder mixture was taken out in an inert atmosphere, and calcined with pressured by a hot pressing machine in an inert atmosphere at 800°C for 4 hours to obtain a sintered mixture (silicon particles were dispersed in a silicate phase).

The obtained sintered product (10 g) was spread on an alumina tray, and put in a batch-type heating furnace. With nitrogen (N2) gas flowing inside the furnace at 1 L/min, the furnace inside was heated to 850°C at a heating rate of 100°C/h. At the time of reaching 850°C, ammonia gas (0.5 L/min) and nitrogen gas (0.5 L/min) were mixed to flow for 5 hours. Thereafter, nitrogen (1 L/min) flowed to cool the furnace at 100°C/hr.

Of the cooled sintered product, a bonding state of a surface nitrogen was measured by using an XPS analyzer (PHI5000 Versaprobe, manufactured by ULVAC-PHI, INCORPORATED, monochromatic Al-Kα ray 25 W, 15 kV), and found a peak derived from an N1s peak at 397.5 eV. This observation confirmed that the silicon composite material including the nitrogen-containing compound on the surface was obtained. A nitrogen content of the silicon composite particles was measured by a thermal conductivity method using an oxygen/nitrogen analyzer (EMGA-930, manufactured by HORIBA, Ltd.), and the nitrogen content was 2.45 wt%.

Thereafter, the obtained silicon composite material was crushed, passed through a mesh with 40 µm, mixed with coal pitch (MCP250, manufactured by JFE Chemical Corporation), and the mixture was calcined in an inert atmosphere at 800°C for 5 hours for covering the surface of the silicon composite material with the conductive carbon to form a conductive layer. A coating amount of the conductive layer was set to 5 mass% based on a total mass of the silicon composite material and the conductive layer. Then, a sieve was used to obtain a silicon composite material comprising the conductive layer and having an average particle diameter of 5 µm.

### [Production of Negative Electrode]

The silicon composite material and graphite were mixed at a mass ratio of 5:95 to be used as a negative electrode active material. The negative electrode active material, sodium carboxymethylcellulose (CMC-Na), styrene-butadiene rubber (SBR), and lithium polyacrylate salt were mixed at a mixing ratio of 96.5:1:1.5:1, water was added thereinto, and then the mixture was stirred by using a mixer (T.K. HIVIS MIX, manufactured by PRIMIX Corporation) to prepare a negative electrode slurry. Then, the negative electrode slurry was applied on a surface of copper foil so that a mass of the negative electrode mixture was 190 g per m². The coating film was dried and then rolled to produce a negative electrode in which negative electrode mixture layers having a density of 1.5 g/cm³ were formed on both the surfaces of the copper foil.

### [Production of Positive Electrode]

Lithium cobaltate, acetylene black, and polyvinylidene fluoride were mixed at a mass ratio of 95:2.5:2.5, N-methyl-2-pyrrolidone (NMP) was added thereinto, and the mixture was stirred by using a mixer (T.K. HIVIS MIX, manufactured by PRIMIX Corporation) to prepare a positive electrode slurry. Then, the positive electrode slurry was applied on a surface of aluminum foil, the coating film was dried, and then rolled to produce a positive electrode in which positive electrode mixture layers having a density of 3.6 g/cm³ were formed on both the surfaces of the aluminum foil.

### [Preparation of Electrolyte Solution]

Into a mixed solvent including ethylene carbonate (EC) and diethyl carbonate (DEC) at a volume ratio of 3:7, LiPF₆ was dissolved at a concentration of 1.0 mol/L to prepare a non-aqueous electrolyte solution.

### [Production of Secondary Battery]

A tab was attached to each electrode, and the positive electrode and the negative electrode were spirally wound with a separator interposed therebetween so that the tab was positioned on the outermost circumference to produce an electrode group. The electrode group was inserted into an exterior made of an aluminum laminated film, the non-aqueous electrolyte solution was injected thereinto, and an opening of the exterior was sealed to obtain a secondary battery A1.

### <Comparative Example 1>

The sintered product (10 g) obtained in Example 1 was heated to 850°C at a heating rate of 100°C/h with nitrogen (N2) gas flowing inside the furnace at 1 L/min. At the time of reaching 850°C, no ammonia gas was used and only nitrogen gas (0.5 L/min) flowed for 5 hours. Thereafter, nitrogen (1 L/min) flowed to cool the furnace at 100°C/hr. Of the cooled sintered product, a bonding state of a surface nitrogen was measured by using an XPS analyzer (PHI5000 Versaprobe, manufactured by ULVAC-PHI, INCORPORATED, monochromatic Al-Kα ray 25 W, 15 kV), but no peak was found within a range of 397 eV or higher and 399 eV or lower. A nitrogen content of the cooled sintered product was measured by a thermal conductivity method using an oxygen/nitrogen analyzer (EMGA-930, manufactured by HORIBA, Ltd.), and the nitrogen content was 810 ppm. In the same manner as in Example 1 except for the above, a battery was produced to obtain a secondary battery B1.

Each battery of Example and Comparative Example was evaluated as follows.

### [Charge-Discharge Cycle Test]

Each battery was repeatedly charged and discharged under the following condition.

### [Charge]

At 25°C, the battery was charged at a constant current of 1 It (800 mA) until a voltage reached 4.2 V, and then charged at a constant voltage of 4.2 V until a current reached 1/20 It (40 mA).

### [Discharge]

At 25°C, the battery was discharged at a constant current of 1 It (800 mA) until the voltage reached 2.75 V.

A rest time between the charge and the discharged was set to 10 minutes. A proportion of a discharge capacity at 500th cycle to a discharge capacity at 1st cycle was specified as a cycle retention.

On the batteries A1 and B1, Table 1 shows: the peak position on the XPS pattern after the nitrogen introduction of the sintered product used for the negative electrode active material; and the results of the charge-discharge cycle test.

**[Table 1]**

| | Nitrogen source | XPS peak within a range of 397 eV or higher and 399 eV or lower [eV] | Capacity retention [%] |
|---|---|---|---|
| Al | N₂+NH₃ | Present | 89.34 |
| Bl | N₂ | Absent | 72.27 |

On the battery A1, using ammonia gas formed the silicon composite material including the nitrogen-containing compound on the surface, and the capacity retention was improved. Meanwhile, on the battery B1, nitrogen gas was used. Although the silicate phase contained a small amount of nitrogen, the nitrogen-containing compound sufficient for resisting hydrogen fluoride was not formed, and the capacity retention was deteriorated.

### INDUSTRIAL APPLICABILITY

The secondary battery according to the present disclosure is useful for a main power source of a mobile communication device, a portable electronic device, and the like.

### REFERENCE SINGS LIST

1 Electrode group
2 Positive electrode lead
3 Negative electrode lead
4 Battery case
5 Sealing plate
6 Negative electrode terminal
7 Gasket
8 Sealing plug

## Claims

1. A negative electrode active material for a secondary battery including a silicon composite material, comprising:
a lithium-ion conductive phase including silicon; and
silicon particles dispersed in the lithium-ion conductive phase, wherein
the silicon composite material includes a nitrogen-containing compound on a surface thereof, and
the nitrogen-containing compound is represented by the general formula: LiₘSiOₓN_{y}M_{z}, wherein 0 ≤ m ≤ 1, 0 ≤ x ≤ 2.5, 0.025 ≤ y ≤ 1.33, 0 ≤ z ≤ 0.5, and M represents a metal element other than Si and Li.

2. The negative electrode active material for a secondary battery according to claim 1, wherein the nitrogen-containing compound includes at least one of silicon nitride and a nitride silicate.

3. The negative electrode active material for a secondary battery according to claim 1 or 2, wherein an XPS pattern obtained by X-ray photoelectron spectroscopy has an N1s peak corresponding to a Si element-N element bond within a range of 397 eV or higher and 399 eV or lower.

4. The negative electrode active material for a secondary battery according to any one of claims 1 to 3, wherein a content of a nitrogen element included in the silicon composite material is 0.1 wt% or more and 20 wt% or less based on a total amount of the silicon composite material.

5. The negative electrode active material for a secondary battery according to claim 1, wherein the metal element M includes at least one element selected from the group consisting of B, Al, Zr, Nb, Ta, La, V, Y, Ti, P, Bi, Zn, Sn, Pb, Sb, Co, Er, F, C, and W which are group 1 elements in a long periodic table and group 2 elements in a long periodic table,.

6. The negative electrode active material for a secondary battery according to any one of claims 1 to 5, wherein the lithium-ion conductive phase includes at least one phase selected from the group consisting of a SiO₂ phase, a silicate phase, and a carbon phase.

7. A secondary battery, comprising:
a negative electrode using the negative electrode active material for a secondary battery according to any one of claims 1 to 6;
a positive electrode; and
a non-aqueous electrolyte solution.
